# EUROPEAN PATENT SPECIFICATION

(11) **EP 0 549 134 B1**
(45) Date of publication and mention of the grant of the patent: **22.05.1996**
(21) Application number: 92310711.4
(22) Date of filing: 23.11.1992
(51) Int. Cl.: B26D 7/30, A22C 25/18

(54) **Cutting method**
Schneidverfahren
Méthode de coupe

(30) Priority: 21.11.1991 JP 305960/91
(43) Date of publication of application: 30.06.1993
(73) Proprietor: NICHIMO COMPANY LIMITED, Tokyo (JP); NIKKO COMPANY LIMITED, Kushiro-shi, Hokkaido (JP)
(72) Inventor: Hukuoka, Nobuo, Kushiro-shi, Hokkaido (JP)
(74) Representative: Pacitti, Pierpaolo A.M.E.

(56) References cited:
- DE-A- 1 815 033
- US-A- 4 136 504

## Description

The present inviention relates to a cutting method for cutting a workpiece such as a fish body in accordance with a desired weight, a shape and the like.

### BACKGROUND OF THE INVENTION

In general, workpieces include those which are longitudinally varied in sectional area and shape, such as fish bodies. To cut such a workpiece in accordance with a desired weight, a longtime skill is required.

For example, in order to cut fish into slices of a predetermined weight, the cutting should be performed so that each of slices has the predetermined weight and even an attractive appearance. In order to achieve this by hand, a longtime skill is required. In addition, in order to likewise cut a large number of fishes by hand, a disadvantage is enountered that many hands are required, resulting in risen presonnel expenses and an increased cost.

Thereupon, methods for automatically cutting fishes by a machine have been proposed in Japanese Patent Application Laid-open Nos. 18539/81, 2093318/87 and 93593/88.

These prior art methods are based on the fact that fishes of one type are of substantially analogous shapes and comprise statistically determining the full length, the total wight, the shape and the like of a reference fishbody, measuring the full length and the total weight of a fish to be cut, and comparing the full length and the total weight of such a fish to be cut with the reference fish body to estimate a fish body of such a fish by an analog calculation. Thereafter, a cutting length of a slice corresponding to a desired weight is calculated on the basis of the estimated fish body, and the fish is cut sequentially in accordance with the calculated length.

However, the prior art methods are incapable of cutting the fish into slices each having a predetermined weight with a good accuracy.

This is because fishes of one type are of substantially analogous shapes, but the fishes are different in shape between individuals, due to the differences in thickness, in male and female fish, in presence and absence of spawn and the like, and hence, a small number of fishes may be of a shape substantially completely analogous to the reference fish body. Therefore, the estimated fish body of the fish to be cut which is estimated on the basis of the reference fish body is largely different from an actual body, resulting in a necessarily deteriorated accuracy of the cut slices.

Another disadvantage is that because the cutting of a fish once estimated in shape of its body into a plurality of slices having a desired weight is based on the estimated fish body, some or all of slices from one fish do not have the desired weight.

Particularly, if the weight of fish slices is not of an acceptable range of predetermined weight, the commercial value of the slices may be significantly reduced or substantially lost. Therefore, it is extremely difficult to cut the fish satisfactorily by the prior art method.

US-4,136,504 forming the base of the preamble of claim 1 discloses a cutting method for cutting slices of, for example, bacon so that each slice has a predetermined weight, which includes assessing each slice and using information from the assessment in determining the thickness of the next slice. The method is applied where relatively thin, parallel-sided slices are required and although the required thickness of each slice is calculated from characteristics of the previously cut slice there is no suggestion that the orientation of the cutting plane could or should be adjusted in order to maximise the utilisation of the workpiece being cut.

### BRIEF SUMMARY OF THE INVENTION

Accordingly, it is an object of the present invention to provide a cutting method which is capable of cutting a workpiece into cut pieces or cuttings having a desired weight with an extremely improved accuracy, so that the cuttings have a higher commercial value, and the workpiece can be effectively utilised without any waste.

To achieve the above object, according to the present invention, there is provided a method for cutting a workpiece into cut pieces or cuttings having a predetermined substantially equal weight, said method comprising the steps of:
performing a trial cutting of a workpiece along a predetermined trial cutting plane to provide a trial cut piece or cutting;
measuring a weight of said trial cut piece ;
determining a weight per unit length of said trial cut piece on the basis of the weight and the position of the trial cutting plane of said trial cut piece;
determining the position of a first cutting plane for a first cut piece of a predetermined weight adjacent the trial cut piece by calculation based on the weight per unit length of the trial cut piece;
performing a first cutting of the workpiece along the first cutting plane to actually provide the first cut piece adjacent the trial cut piece; and
likewise determining the position of a n-th cutting plane for an n-th cut piece by calculation based on the weight per unit length determined on the basis of the weight and the position of the cutting plane of the most recently cut piece, i.e. an n-l-th cut piece, and performing an n-th cutting of the workpiece along the n-th cutting plane to actually provide the n-th cut piece, characterised in that: the orientation of the first and subsequent cutting planes is selectable; and
the step of determining the respective positions of the first and subsequent cutting planes includes determining the respective orientations of said first and subsequent cutting planes.

With the above feature of the present invention, in cutting a workpiece into cut pieces of a predetermined weight, an information of the trial cut piece as well as the subsequent cut piece is fed back as a cutting condition for a following cut piece to determine the position of a cutting plane for the following cut piece, and therefore, it is possible to provide cut pieces having a predetermined equal weight with an extremely improved accuracy.

In addition, according to the present invention the method for cutting a workpiece into cut pieces or cuttings having a predetermined equal weight, may further comprise the steps of measuring the total weight of the workpiece;
determining the maximum number of cut pieces each having a weight within an acceptable range of a predetermined weight which can be cut from the workpiece;
and wherein the determining of the positions of the cutting planes is performed so as to provide said maximum number of cut pieces.

With the above feature of the present invention, in addition to an effect of the first feature, the workpiece can be divided into the maximum number of cut pieces depending upon the weight of the cut pieces within an acceptable weight range, and cut into the cut pieces with an effectively minimised wastage of the workpiece.

In this way, when the workpiece is to be cut into cut pieces each having a predetermined weight according to the present invention, an information of the trial cut piece as well as the subsequent cut piece is fed back as a cutting condition for a following cut piece to determine the position of a cutting plane for the following cut piece, and therefore it is possible to provide cut pieces having a predetermined equal weight with an extremely improved accuracy.

Therefore, the cutting method according to the present invention has an effect that it is possible to cut the workpiece into cut pieces each having a desired weight with an extremely increased accuracy, so that the cut pieces have a higher commercial value, and the workpiece can be effectively utilized without any waste, leading to a reduced cost.

### BRIEF DESCRIPTION OF THE DRAWINGS

Fig.1 is a perspective view illustrating a system for cutting a half body of salmon;
Fig.2 is a plan view of the half body cut by a cutting method according to the present invention;
Fig.3 is a flow chart for illustrating the cutting method of the present invention; and
Fig.4 is a block diagram illustrating an outline of an apparatus used to carry out the cutting method of the present invention.

### DETAILED DESCRIPTION OF THE PREFERRED EMBODIMENTS

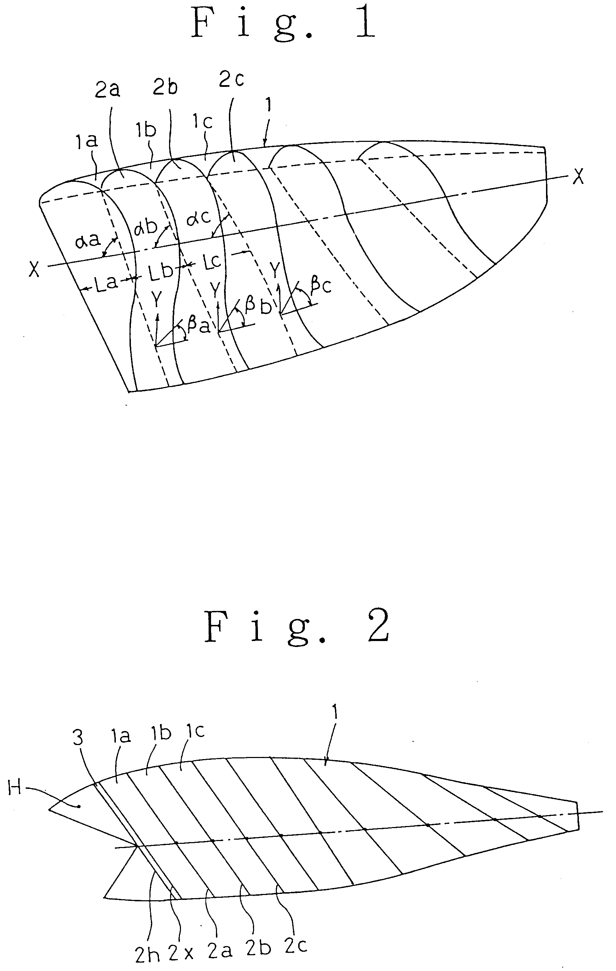

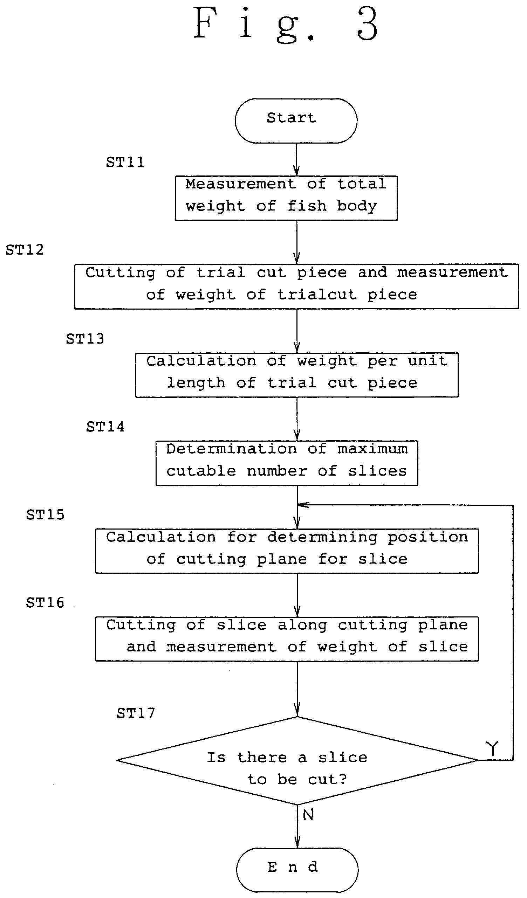

The present invention will now be described by way of a preferred embodiment in connection with the accompanying drawings, i.e., Figs.1 to 4.

This embodiment is used to cut a half body 1 of a salmon as a workpiece.

In general, in order to cut the half body 1 of the salmon into cut pieces or slices 1a, 1b, 1c --- each having a predetermined weight in an attractive fashion, as show in Fig.1, the half body 1 is cut along cutting planes 2a, 2b, 2c ---. The position of the cutting plane 2a depends upon the weight of the slice 1a and is determined by a cutting length La in a direction X of a center line substantially corresponding to a side line of a fish body of the salmon 1, an angle of inclination αa of the fish body in a plane, and an angle of inclination αb of the fish body in a thicknesswise direction.

The cutting of the half body of the salmon by the method of the present invention will be described below with reference to Fig.2 to 4.

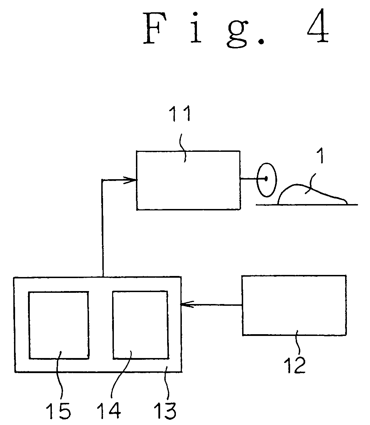

Fig.4 illustrates the outline of the construction of an apparatus used for carrying out the method of the present invention. The cutting of the half body 1 of the salmon is performed by a cutting device 11. The cutting device 11 may be of a known type, and for example, a cutting device having a cutting edge (not shown) capable of cutting the half body 1 in accordance with the cutting length La and the inclination angles αa and αb may be used. Slices resulting from cutting of the half body by the cutting device 11 are carried to a known weighing device 12 where their weights are detected. The detected weights are delivered into a motion control unit 13. The motion control unit 13 comprises a calculating device 14 for performing calculations from a step ST13 to a step ST15, a display 15 comprised of a liquid crystal display or the like for displaying the results of the calculations, and other instruments, all of which are mounted therein. The motion control unit 13 is adapted to deliver the results of the calculations as -control commands into the cutting device 11.

The cutting of the half body 1 of the salmon is carried out in the following manner by the apparatus of such construction.

First, at a step ST11, the total weight of the half body 1 of the salmon is measured by the weighing device 12. Then, a head H is cut off by the cutting device 11, and the weight of the head H is measured by the weighing device 12.

Then, at a step ST12, the half body 1 of the salmon is cut from its leading portion along a trial cutting plan 2x by the cutting device to provide a trial cut piece 3, and the weight of the trail cut piece 3 is measured by the weighing device 12.

The position of this trial cutting plane 2x may be, for example, a position 1 to 3 mm spaced apart in parallel from the cutting plane 2h for the head H of the salmon. This is for the purpose of minimizing the amount of the trial cut piece 3 as much as possible and providing slices of the salmon in a larger amount, for the effective utilization of the salmon as a resource.

At a step ST13, the weight per unit length of the trial cut piece 3 is determined by the calculating device 14 in the motion control unit 13 on the basis of the weight and the position of the trial cutting plane 2x of the trial cut piece 3.

At a step ST14, the weight resulting from subtraction of the weight of the head of the salmon and the weight of the trial cut piece from the total weight measured at the step ST11 is divided by a desired weight of the slice 1a of the salmon by the calculating device 14 of the motion control unit 13 to determine the number of slices, with the proviso that if such weight cannot be divided, fractions of the actual quotient are omitted or counted as one under a condition that the weight of the slice 1a falls within an acceptable weight range, thereby providing the maximum integral number of slices, and then, the weight resulting from subtraction of the weight of the head of the salmon and the weight of the trial cut piece from the weight of the half body 1 is divided by such maximum number of slices to provide a weight of each of slices 1a, 1b --- to be cut. In this manner, the fish meat can be divided and cut exhaustively and thus effectively utilized as a resource of the salmon. If the above-described result of the calcuation is not fallen within the acceptable weight range, the desired weight is taken as a weight of each of the slice 1a, 1b ---.

Then, at a step ST15, the position of a cutting plane 2a for the desired slice 1a is determined by the calculating device 14 of the motion control unit 13 on the basis of the weight per unit length of the trial cut piece 3 determined at the step ST13.

More specifically, if the weight of trial cut piece is 5 g/mm and the desired weight of the slice 1a is of 50 g, the position of the cutting plane 2a for the desired slice 1a is calculated by an expression: the weight of the slice 1a (50 g) ö the weight of the trial cut piece (5 g/mm ), thereby giving a length La from the trial cutting plane to the first cutting plane (10 mm) which will be referred to as a cutting length hereinafter.

However, even if the half body is cut as it is, the desired weight is not obtained, because the form of the salmon is varied toward its tail.

Thereupon, the degree of variation is defined as a form constant f. If the size of the fish body is gradually increased, the degree of variation is defined as a value smaller than 1. If the size of the fish body is gradually decreased, the degree of variation is defined as a value exceeding 1. Thus, the cutting length La may be multiplied by the degree of variation to determine the position of the cutting plane 2a.

The calculation result determined in this manner is displayed on the dislplay 15, and the position of the cutting plane 2a is delivered to the cutting device 11.

Then, at a step ST16, the half body is cut along the cutting plane 2a by the cutting device 11 on the basis of the above-described calculations to provide the slice 1a, and the weight of the cut slice 1a is measured and supplied to a next processing step.

At a step ST17, it is judged whether or not there is a slice to be subsequently cut. If there is no slice to be cut, the cutting step is completed. If there is a slice to be cut, the processing is returned to the step ST15.

At a step ST15, it is judged on the basis of the measured weight of the slice 1a whether or not the desired slice 1a has been obtained. If the weight of the slice 1a is different from the desired weight, the form constant f for subsequent slice including the slice 1a is corrected, and the position of a cutting plane 2b for a slice 1b is determined on the corrected form constant f.

Then, at a step ST16, the half body is along the cutting plane 2b to provide the slice 1b, and the weight of the slice is measured. If the measured weight of the slice 1b is different from the weight of the slice 1a, the from constant f for subsequent slice including the slice 1b is further corrected, and the cutting of the half body into such subsequent slice in a loop from the steps ST15 to ST16 is continued in the same manner as in the cutting of the half body into the slices 1a and 1b, until the remaining slice to be cut dwindle away into nothing, i.e., until the answer of the judgement at the step ST17 becomes NO.

Each of the slices cut in this manner is provided with a good accuracy, an attractive appearance and an extremely high commercial value according to the system shown in Fig.1.

In this way, in this embodiment, when the fish body is to be cut into slices each having a predetermined weight, the information of the trial cut piece and the subsequent slice is fed back as a cutting condition to determine the position of the cutting plane for each of the slices and therefore, it is possible to provide the slices each having the predetermined weight and an extremely good accuracy.

It will be understood that although salmon is used as the workpieces in the above described embodiment, the present invention is likewise applicable to other workpieces.

It will be also understood that present invention is not limited to the above-described embodiment, and various modifications and variations may be made without departing from the scope of the invention defined in accompanying claims.

## Claims

1. A method for cutting a workpiece (1) into cut pieces (1a, 1b, 1c) or cuttings having a predetermined substantially equal weight, said method comprising the steps of:
performing a trial cutting of a workpiece along a predetermined trial cutting plane (2x) to provide a trial cut piece (3) or cutting;
measuring a weight of said trial cut piece (3);
determining a weight per unit length of said trial cut piece (3) on the basis of the weight and the position of the trial cutting plane (2x) of said trial cut piece (3);
determining the position of a first cutting plane (2a) for a first cut piece (1a) of a predetermined weight adjacent the trial cut piece (3) by calculation based on the weight per unit length of the trial cut piece (3);
performing a first cutting of the workpiece along the first cutting plane (2a) to actually provide the first cut piece (1a) adjacent the trial cut piece (3); and
likewise determining the position of a n-th cutting plane for an n-th cut piece by calculation based on the weight per unit length determined on the basis of the weight and the position of the cutting plane of the most recently cut piece, i.e. an n-l-th cut piece, and performing an n-th cutting of the workpiece along the n-th cutting plane to actually provide the n-th cut piece, characterised in that: the orientation of the first (2a) and subsequent (2b, 2c) cutting planes is selectable; and the step of determining the respective positions of the first (2a) and subsequent (2b, 2c) cutting planes includes determining the respective orientations of said first (2a) and subsequent (2b, 2c) cutting planes.

2. A method for cutting a workpiece (1) into cut pieces (1a, 1b, 1c) or cuttings having a predetermined substantially equal weight, as claimed in Claim 1, characterised in that said method further comprises the steps of:
measuring the total weight of the workpiece (1);
determining the maximum number of cut pieces (1a, 1b, 1c) each having a weight within an acceptable range of a predetermined weight which can be cut from the workpiece (1);
and wherein the determining of the positions of the cutting planes (2a, 2b, 2c) is performed so as to provide said maximum number of cut pieces (1a, 1b, 1c).

## Patentansprüche

1. Verfahren zum Schneiden eines Werkstückes (1) zu abgeschnittenen Stücken (1a, 1b, 1c) oder Schneidabfällen mit einem vorbestimmten, im wesentlichen gleichen Gewicht, wobei das Verfahren besteht aus den Stufen:
Ausführen eines Versuchsschneidens eines Werkstückes entlang einer vorbestimmten Versuchsschneidebene (2x) zur Bereitstellung eines abgeschnittenen Versuchsstückes (3) oder eines Schneidabfalls;
Messen des Gewichts des abgeschnittenen Versuchsstückes (3);
Bestimmen des Gewichts je Einheitslänge des abgeschnittenen Versuchsstückes (3) auf der Basis des Gewichts und der Position der Versuchsschneidebene (2x) des abgeschnittenen Versuchsstückes (3);
Bestimmen der Position einer ersten Schneidebene (2a) für ein erstes abgeschnittenes Stück (1a) mit einem vorbestimmten Gewicht neben dem abgeschnittenen Versuchsstück (3) durch eine Berechnung auf der Basis des Gewichts je Einheitslänge des abgeschnittenen Versuchsstückes (3);
Ausführen eines ersten Schneidens des Werkstückes entlang der ersten Schneidebene (2a), um tatsächlich das erste abgeschnittene Stück (1a) neben dem abgeschnittenen Versuchsstück (3) bereitzustellen; und gleichartiges Bestimmen der Position einer n-ten Schneidebene für ein n-tes abgeschnittenes Stück durch Berechnung auf der Basis des Gewichts pro Einheitslänge, bestimmt auf der Basis des Gewichts und der Position der Schneidebene des zuvor abgeschnittenen Stückes, also eines n-1-ten abgeschnittenen Stückes, und Ausführung eines n-ten Schnittes des Werkstückes entlang der n-ten Schneidebene, um das n-te abgeschnittene Stück tatsächlich bereitzustellen, dadurch gekennzeichnet, daß die Ausrichtung der ersten (2a) und der nachfolgenden (2b, 2c) Schneidebenen wählbar ist; und daß die Stufe der Bestimmung der betreffenden Positionen der ersten (2a) und der nachfolgenden (2b, 2c) Schneidebenen die Bestimmung der betreffenden Ausrichtungen der ersten (2a) und der nachfolgenden (2b, 2c) Schneidebenen einschließt.

2. Verfahren zum Schneiden eines Werkstückes (1) zu abgeschnittenen Stücken (1a, 1b, 1c) oder Schneidabfällen mit einem vorbestimmten, im wesentlichen gleichen Gewicht nach Anspruch 1, dadurch gekennzeichnet, daß das Verfahren weiterhin besteht aus den Stufen:
Messen des Gesamtgewichts des Werkstückes (1);
Bestimmung der maximalen Anzahl von abgeschnittenen Stücken (1a, 1b, 1c), die jeweils ein Gewicht innerhalb eines akzeptierbaren Bereichs eines vorbestimmten Gewichts haben, welches von dem Werkstück (1) abgeschnitten werden kann;
und wobei die Bestimmung der Positionen der Schneidebenen (2a, 2b, 2c) derart ausgeführt wird, daß die maximale Anzahl von abgeschnittenen Stücken (1a, 1b, 1c) erhalten wird.

## Revendications

1. Méthode de coupe d'une pièce (1) en pièces coupées ou morceaux (1a, 1b, 1c) de poids prédéterminés sensiblement égaux, ladite méthode comportant les étapes suivantes :
effectuer une coupe d'essai d'une pièce le long d'un plan de coupe d'essai prédéterminé (2x) pour obtenir une pièce coupée ou morceau d'essai (3) ;
mesurer le poids de ladite pièce coupée d'essai (3) ;
déterminer le poids par unité de longueur de ladite pièce coupée d'essai (3) sur la base du poids et de la position du plan de coupe d'essai (2x) de ladite pièce coupée d'essai (3) ;
déterminer la position d'un premier plan de coupe (2a) pour une première pièce coupée (1a) d'un poids prédéterminé, adjacente à la pièce coupée d'essai (3), au moyen de calculs sur la base du poids par unité de longueur de la pièce coupée d'essai (3) ;
effectuer une première coupe de la pièce le long d'un premier plan de coupe (2a) pour fournir effectivement la première pièce coupée (1a) adjacente à la pièce coupée d'essai (3) ; et déterminer similairement la position d'un n^{ième} plan de coupe pour une n^{ième} pièce en effectuant des calculs sur la base du poids par unité de longueur déterminé à partir du poids et de la position du plan de coupe de la pièce coupée précédente, c'est-à-dire la n-1^{ième} pièce coupée, et effectuer une n^{ième} coupe de la pièce le long du n^{ième} plan de coupe pour fournir effectivement la n^{ième} pièce coupée, caractérisée en ce que l'orientation du premier plan de coupe (2a) et des plans de coupe suivants (2b, 2c) peut être sélectionnée et en ce que l'étape de détermination des positions respectives du premier plan de coupe (2a) et des plans de coupe suivants (2b, 2c) comporte la détermination des orientations respectives dudit premier plan de coupe (2a) et des plans de coupe suivants (2b, 2c).

2. Méthode de coupe d'une pièce (1) en pièces coupées ou morceaux (1a, 1b, 1c) de poids prédéterminés sensiblement égaux, selon la revendication 1, caractérisée en ce que ladite méthode comporte en outre les étapes suivantes :
mesurer le poids total de la pièce (1) ;
déterminer le nombre maximum de pièces coupées (1a, 1b, 1c) présentant chacune un poids compris dans une tolérance acceptable de poids prédéterminé, susceptibles d'être coupées dans la pièce (1) ;
et dans laquelle la détermination des positions des plans de coupe (2a, 2b, 2c) est effectuée de manière à fournir ledit nombre maximum de pièces coupées (1a, 1b, 1c).
